# EUROPÄISCHE PATENTSCHRIFT

(11) **EP 1 309 079 B1**
(45) Veröffentlichungstag und Bekanntmachung des Hinweises auf die Patenterteilung: **21.12.2005**
(21) Anmeldenummer: 01125854.8
(22) Anmeldetag: 30.10.2001
(51) Int. Cl.: H02P 6/20

(54) **Verfahren zum Betrieb eines frequenzumrichtergesteuerten Permanentmagnetmotors**
Method for controlling a permanent magnet motor with a frequency converter
Procédé de contrôle d'un moteur à aimants permanents commandé par un convertisseur de fréquence

(43) Veröffentlichungstag der Anmeldung: 07.05.2003
(73) Patentinhaber: GRUNDFOS A/S, 8850 Bjerringbro (DK)
(72) Erfinder: Funder, Flemming, 8382 Hinnerup (DK); Sorensen, Jens Engen, 8800 Viborg (DK); Dissing, Torben, 8850 Bjerringbro (DK); Lyngholm, Jan, 8471 Sabro (DK)
(74) Vertreter: Vollmann, Heiko

(56) Entgegenhaltungen:
- WO-A-91/12651
- DE-A- 3 642 727
- DE-A- 3 831 142
- DE-A- 19 953 265
- US-A- 4 633 157
- US-A- 5 621 248
- HERRMANN B ET AL: "PHOTOVOLTAIC WATER PUMPING SYSTEM WITH PROGRESSIVE CAVITY PUMP" , PROCEEDINGS OF THE INTERNATIONAL PHOTOVOLTAIC ENERGY CONFERENCE. FLORENCE, MAY 9 - 13, 1988, DORDRECHT, KLUWER, NL, VOL. VOL. 1 CONF. 8, PAGE(S) 416-420 XP000075146 * Seite 417, Absatz 3; Abbildung 2 *
- PATENT ABSTRACTS OF JAPAN vol. 011, no. 140 (M-586), 8. Mai 1987 (1987-05-08) -& JP 61 277880 A (YAMAHA MOTOR CO LTD), 8. Dezember 1986 (1986-12-08)
- PATENT ABSTRACTS OF JAPAN vol. 008, no. 176 (E-260), 14. August 1984 (1984-08-14) -& JP 59 070186 A (TOSHIBA KK), 20. April 1984 (1984-04-20)
- PATENT ABSTRACTS OF JAPAN vol. 1997, no. 09, 30. September 1997 (1997-09-30) -& JP 09 137794 A (HITACHI LTD;HITACHI TAGA ENG LTD), 27. Mai 1997 (1997-05-27)

## Beschreibung

Die Erfindung betrifft ein Verfahren zum Betrieb eines frequenzumrichtergesteuerten Permanentmagnetmotors, bei dem der Rotor durch einen mehrere Ansteuerungsschritte umfassenden Anfahrvorgang in Rotation versetzt wird.

Ein Verfahren zum Anfahren eines Permanentmagnetgleichstrommotors ist beispielsweise aus DE 199 53 265 A1 bekannt. Dort wird durch geschickte Wahl von Motorwicklungskombinationen, die nacheinander mit Spannung beaufschlagt werden, ungeachtet der aktuellen Rotorstellung dieser zunächst in einem oder mehreren Schritten in eine Anfahrstellung bewegt, von der aus dann der Motor in vorbestimmter Richtung zum Anfahren angesteuert wird. Auf diese Weise kann ohne die Erfassung der Rotorposition sichergestellt werden, dass der Rotor definiert und mit möglichst hohem Anfahrmoment zu laufen beginnt. Das Verfahren verzichtet auf eine aufwändige Erfassung der Rotorposition mittels Sensor, sondern nutzt zur Erfassung der Rotorposition die in den gerade nicht mit Spannung beaufschlagten Wicklungen induzierte Spannung zur Ermittlung der Rotorposition aus, was allerdings erst möglich ist, wenn der Rotor in Bewegung ist.

Das vorbeschriebene Verfahren hat sich in der Praxis bestens bewährt, es kann jedoch ohne weitere Vorkehrungen an seine Grenzen stoßen, wenn das Versorgungsnetz für den Motor nicht ausreichend stabil ist. Solche Konstellationen können sich beispielsweise ergeben, wenn der Motor von einem wind- oder wassergetriebenen Generator gespeist wird oder mittels Solarzellen. Derartige Anordnungen werden heutzutage beispielsweise für die Versorgung von Pumpen gewählt, wenn ein stationäres Versorgungsnetz nicht zur Verfügung steht. Dies kann insbesondere dann zu Problemen führen, wenn Pumpen eingesetzt werden, die, wie zum Beispiel Exzenterschneckenpumpen, aufgrund des Slip-Stick-Effekts ein besonders hohes Anfahrmoment benötigen.

Vor diesem Hintergrund liegt der Erfindung die Aufgabe zugrunde, ein gattungsgemäßes Verfahren so auszubilden, dass der Anfahrvorgang auch beim Einsatz eines schwachen Versorgungsnetzes sichergestellt ist.

Diese Aufgabe wird gemäß der Erfindung durch die in Anspruch 1 angegebenen Merkmale gelöst. Weitere Ausgestaltungen und Weiterbildungen des erfindungsgemäßen Verfahrens sind in den weiteren Ansprüchen, der nachfolgenden Beschreibung sowie der Zeichnung angegeben.

Grundgedanke der vorliegenden Erfindung ist es, den Anfahrvorgang des Motors so zu gestalten, dass auch bei schwachem Netz der Motor vergleichsweise stabil versorgt wird, damit er mit dem gewünschten hohen Drehmoment anfährt. Dies wird gemäß der Erfindung dadurch erreicht, dass zwischen zwei Anfahrschritten, insbesondere zwischen einem Positionierschritt und einem Anfahrschritt, sichergestellt wird, dass der Zwischenkreiskondensator bis auf ein vorbestimmtes Niveau geladen ist, bevor der nächste Ansteuerungsschritt gestartet wird. Auf diese Weise kann auch bei schwachem Versorgungsnetz sichergestellt werden, dass der Motor mit ausreichender Energie versorgt und somit mit einem gewünschten hohen Drehmoment anfährt, so dass die erhöhten Reibmomente, die sich beispielsweise aufgrund des weiter oben angegebenen Slip-Stick-Effekts ergeben, zuverlässig überwunden werden können.

Vorteilhaft wird während des Anfahrvorgangs nicht nur die Aufladung der Zwischenkreiskapazität bis auf ein vorbestimmtes Niveau durchgeführt, sondern darüber hinaus auch die Zwischenkreisspannung des Frequenzumrichters im Vergleich zu der Zwischenkreisspannung im späteren selbstgeführten Betrieb erhöht. Dies kann ohne weiteres durch Einsatz eines Buck-Boost-Konverters im Zwischenkreis erfolgen, wie dies an sich bekannt ist. Die Spannungserhöhung während der Anfahrphase ergibt den weiteren Vorteil, dass das Energieniveau innerhalb des Frequenzumrichters, insbesondere des Zwischenkreises, erhöht wird, d. h. dass bei erhöhter Spannung und gleichem Ladezustand der Zwischenkreiskapazität dem Motor eine höhere Leistung kurzfristig zur Verfügung gestellt werden kann. Auch hierdurch kann das Anfahrmoment des Motors weiter gesteigert werden, im Wesentlichen unabhängig von der Versorgungsnetzsituation.

Wie aus DE 199 53 265 A1 bekannt ist, ist es zweckmäßig, vor dem eigentlichen Hochfahren des Rotors in der gewünschten Drehrichtung, diesen in mehreren Teilschritten zu positionieren, um unabhängig von der Ausgangsstellung des Rotors eine vorbestimmte Positionierung vor dem eigentlichen Anfahren sicherzustellen. Um auch bei diesen Zwischenschritten sicherzustellen, dass der Rotorsich ggf. in der gewünschten Weise dreht, ist es zweckmäßig, auch zwischen diesen einzelnen Zwischenschritten dafür Sorge zu tragen, dass die Zwischenkreiskapazität bis zu einem vorbestimmten Niveau geladen ist, bevor der nächste Schritt eingeleitet wird, d. h. eine Wicklungskombination des Motors mit Spannung beaufschlagt wird. Dieses vorbestimmte Ladungsniveau sollte vergleichsweise hoch gewählt werden, beispielsweise mindestens 80 % des maximal möglichen Ladeniveaus gewählt werden.

Eine weitere vorteilhafte Maßnahme gemäß der Erfindung ist es, bei einem schwachen Versorgungsnetz den Ladevorgang der Zwischenkreiskapazität zeitweise zu unterbrechen. Dies ist insbesondere dann sinnvoll, wenn als Versorgungsnetz ein wind- oder wasserkraftgetriebener Generator dient, der üblicherweise selbst noch im Hochlauf begriffen ist, wenn der Motor angefahren werden soll. Durch diese Ladepausen wird erreicht, dass der Generator nicht ständig unter Last arbeitet, wodurch der Hochlauf des Generators erheblich beschleunigt wird.

Zweckmäßigerweise wird der Ladevorgang in Abhängigkeit des Leistungsverlaufs des speisenden Energiewandlers unterbrochen, so dass die Ladeunterbrechung gezielt im Hinblick auf das Versorgungsaggregat getaktet ist. Dabei kann als Maß für Anzahl und Dauer der Ladeunterbrechung vorzugsweise die Drehzahl des Generators bzw. der Drehzahlverlauf herangezogen werden. Zweckmäßigerweise wird der Ladevorgang so gesteuert, dass die Generatordrehzahl nicht über ein vorbestimmtes Maß abfällt. Dies kann ggf. auch kontinuierlich erfolgen, bevorzugt jedoch durch Einlegung der vorgenannten Ladepausen.

Zweckmäßigerweise wird der Motor hinsichtlich seines Anfahrmomentes in Abhängigkeit des Reib-und/oder Trägheitsmoments der angeschlossenen Arbeitsmaschine angesteuert. Dies kann mittels der Steuer- und Regelelektronik des Frequenzumrichters selbsttätig, sei es im kontinuierlichen Betrieb, während eines Anfahrvorgangs oder während eines Probezyklusses ermittelt werden. Eine solche Steuerung ermöglicht den Einsatz desselben Typs von Frequenzumrichtermotorkombination für unterschiedlichste Anwendungen. So kann damit eine ein hohes Anfahrmoment benötigende Verdrängerpumpe, wie beispielsweise eine Exzenterschneckenpumpe, oder aber auch eine ein nur geringes Anfahrmoment benötigende Zentrifugalpumpe angetrieben werden. Gerade bei letzterem Einsatz ist es wichtig, dass nicht mit dem maximal möglichen Anfahrmoment der Motor angefahren wird, da aufgrund des geringen Reibmoments und der geringen Massenträgheit sonst die Gefahr besteht, dass der Rotor eine über die gewünschte Anfahrposition hinausgehende Stellung anfährt.

Um eine möglichst gute Anpassung des Anfahrvorgangs an das zur Verfügung stehende Netz zu gewährleisten, insbesondere beim Einsatz eines wind- oder wasserkraftgetriebenen Generators, ist es von Vorteil, die Drehzahlsteuerung des Motors in Abhängigkeit der Geschwindigkeit der Leistungsänderung des speisenden Energiewandlers zu vollziehen. Hier kann also für den Fall, dass die Generatordrehzahl nicht langsam und kontinuierlich, sondern spontan abfällt, durch eine schnelle Regelung der Ansteuerung des Motors, welche die Drehzahl, mit der der Motor angesteuert wird, überproportional zurückfährt, entgegengesteuert werden, wodurch ein Anhalten des Generators oder ein Absinken des Generators in untere Drehzahlbereiche, in denen die Energieausbeute regelmäßig vergleichsweise gering ist, verhindert werden. Der Motor wird also bei einem plötzlichen Leistungsabfall des Generators mit einer geringeren Drehzahl als beim stetigen Drehzahlabfall des Generators angesteuert.

Bei Tauchpumpenaggregaten und Einsatz miniaturisierter Leistungselektronik zählt es inzwischen zum Stand der Technik, den Frequenzumrichter, bestehend aus Eingangskreis, Zwischenkreis, Wechselrichter und der Steuer- und Regelungselektronik, als bauliche Einheit mit dem Pumpenaggregat auszubilden, so dass lediglich ein Netzkabel aus dem Aggregat zum Anschluss herauszuführen ist. Gemäß der Erfindung ist es vorgesehen, über diese Frequenzumrichterelektronik hinausgehend auch die für die Steuerung des speisenden Aggregats erforderliche Elektronik (Steuerung und/oder Regelung) in das Pumpenaggregat zu integrieren. Dann können die vorbeschriebenen Steuerungen, welche das Generatorverhalten berücksichtigen, in die frequenzumrichterseitig ohnehin vorhandenen Steuer- und Regelungsschaltungen eingebunden bzw. implementiert werden. Eine solche Anordnung ist besonders günstig, da die gesamte Steuerungs- und Regelungselektronik zentral im Aggregat befindlich ist, so dass diese Baugruppe zentral gekapselt werden kann, wobei alle anderen Aggregatkomponenten davon unabhängig angeordnet und ausgebildet sein können. Es ist darüber hinaus nur eine Versorgungsleitungsverbindung zwischen Pumpenaggregat und Generator nötig, was den Aufbau weiter vereinfacht. Insbesondere dann, wenn längere Leitungsverbindungen zwischen Generator und Pumpenaggregat erforderlich sind, erweist sich eine solche Anordnung als zweckmäßig, da handelsübliche Kabel eingesetzt werden können.

Ein nach den vorbeschriebenen Verfahrensmerkmalen betriebener, frequenzumrichtergesteuerter Permanentmagnetmotor kann sowohl versorgungsseitig als auch lastseitig an unterschiedliche Aggregate angeschlossen werden, ohne dass es einer fertigungsseitigen Anpassung bedarf. Aufgrund der vorbeschriebenen Steuerungen wird stets sichergestellt, dass in Abhängigkeit vom Versorgungsnetz und in Abhängigkeit des angetriebenen Aggregats, beispielsweise der davon angetriebenen Pumpe, diese zuverlässig anläuft und in den selbstgeführten Betrieb geführt wird.

Die Erfindung ist nachfolgend anhand eines in der Zeichnung dargestellten Ausführungsbeispiels erläutert. Es zeigen:
- Fig. 1: ein Diagramm, welches die Zwischenkreisspannung in Abhängigkeit der Zeit beim Anfahren eines Permanentmagnetmotors zeigt und
- Fig. 2: in vereinfachter, schematischer Darstellung den Längsschnitt eines Tauchpumpenaggregats gemäß der Erfindung.

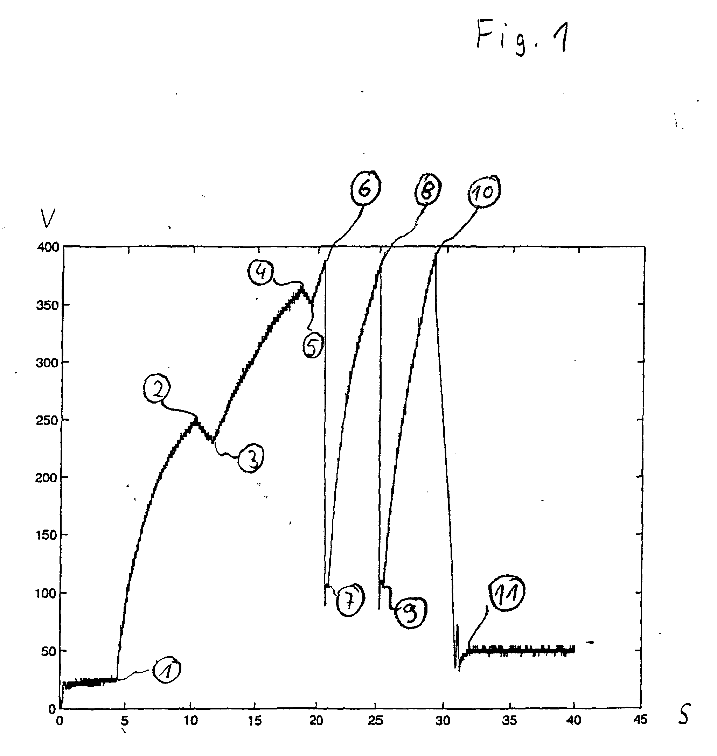

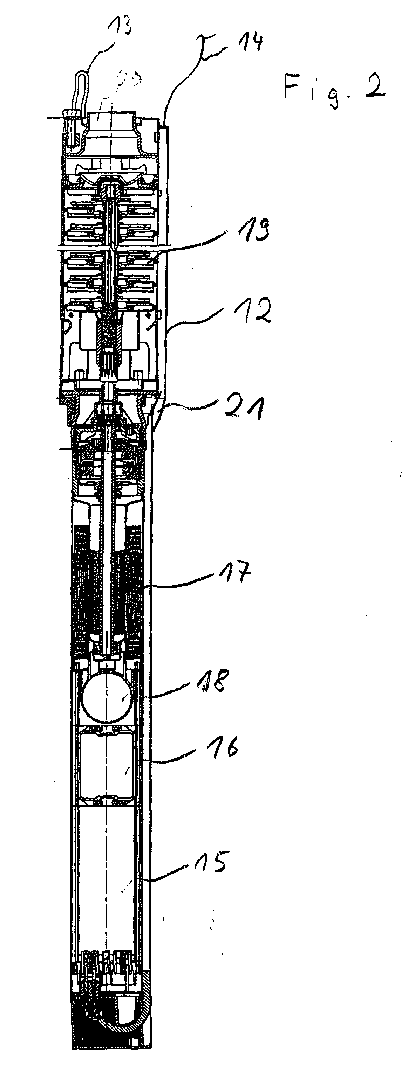

Das anhand von Fig. 1 dargestellte Spannungsdiagramm zeigt den Spannungsverlauf des Zwischenkreises eines Frequenzumrichters, der einen Permanentmagnetmotor ansteuert, der eine Pumpe antreibt entsprechend der weiter unten erläuterten Aggregatdarstellung gemäß Fig. 2. Der Frequenzumrichter weist einen üblichen Aufbau auf, nämlich bestehend aus Eingangs- bzw. Gleichrichterkreis, einem Zwischenkreis sowie einem Wechselrichter als Leistungskreis, der den Permanentmagnetmotor ansteuert. Darüber hinaus ist ein Steuer- und Regelkreis vorgesehen, welcher sämtliche Steuer- und Regelungsfunktionen des Motors sowie auch des speisenden Generators umfasst. Soweit es den aggregatseitigen Aufbau angeht, ist dieser an sich bekannt und im Übrigen auch in DE 199 53 265 A 1 im Einzelnen beschrieben.

Gespeist wird das frequenzumrichtergesteuerte Aggregat durch einen (nicht dargestellten) Generator, der im dargestellten Beispiel (Fig. 1) windkraftgetrieben ist. Das Windrad des Generators wird bei dem Diagramm gemäß Fig. 1 mit einer Windgeschwindigkeit von 3 m/sec beaufschlagt. Solange keine elektrische Energie abgenommen wird, steht das Windrad still. In dem Augenblick, in dem der Permanentmagnetmotor angefahren werden soll, wenn beispielsweise ein von der Pumpe beaufschlagter Druckspeicher einen Druckabfall signalisiert, muss das Windrad zunächst angefahren werden. Solange das Windrad nicht angefahren ist, liegt im Zwischenkreis des Frequenzumrichters keine Spannung an. Dieser Zustand ist im dargestellten Diagramm gemäß Fig. 1 durch den Anfang der Kurve bei Null dargestellt.

Unmittelbar nachdem das Windrad zu laufen begonnen hat, liegt am Generator eine Spannung an, welche eine entsprechende Spannung im Zwischenkreis erzeugt, hier 20 Volt. Sobald das Windrad, d. h. der Generator, eine bestimmte Drehzahl erreicht hat, gibt die Steuer- und Regelungselektronik des Frequenzumrichters den Ladevorgang des Zwischenkreiskondensators frei. Dieser Zustand ist im Diagramm gemäß Fig. 1 nach fünf Sekunden erreicht. Dieser Punkt ist im Diagramm mit 1 gekennzeichnet.

Von da an wird der Ladevorgang des Zwischenkreiskondensators eingeleitet. Der Zwischenkreiskondensator wird stetig bis zu einer Spannung von 250 Volt geladen. Wie sich aus der abfallenden Steilheit der Kurve im oberen Bereich ergibt, ist der Spannungsanstieg nicht linear, was auch auf eine zu hohe Belastung des Generators hindeutet.

Der Ladevorgang wird daher im Punkt 2 nach etwa zehn Sekunden unterbrochen, und zwar für zwei Sekunden. In dieser Zeit wird dem Zwischenkreis keine elektrische Energie zugeführt. Aufgrund der Selbstentladung des Kondensators fällt die Zwischenkreisspannung vom Punkt 2 zum Punkt 3 hin um etwa 10 Volt ab.

Im Punkt 3 wird der Ladevorgang fortgesetzt. Der Zwischenkreiskondensator wird bis zu einer Spannung von über 350 Volt geladen. Die Abflachung des Spannungsanstiegs zum Punkt 4 erzeugt eine weitere Ladepause zum Punkt 5 hin, wiederum mit entsprechendem Spannungsabfall. Vom Punkt 5 an erfolgt wiederum der normale Ladevorgang, bis das vorbestimmte Ladeniveau von 385 Volt im Punkt 6 erreicht ist.

Sobald dieses Ladeniveau erreicht ist, wird der Motor zu einem ersten Teilschritt mit einer vorbestimmten Wicklungskombination angesteuert. Die im Zwischenkreiskondensator gespeicherte elektrische Energie gelangt schlagartig in den Wechselrichter und von dort in den Motor, so dass der Rotor eine erste Zwischenstellung anfährt. Es erfolgt nun eine erneute Aufladung des Zwischenkreiskondensators vom Punkt 7 bis zum Punkt 8 der Kurve. Wie sich aus der Steilheit der Ladekurve ergibt, hat das den Generator antreibende Windrad zwischenzeitlich die Betriebsdrehzahl erreicht, so dass der Ladestrom zumindest keine solche Drehzahlabsenkung bewirkt, die eine weitere Ladepause erforderlich machen würde. Bei Erreichen der vorbestimmten Ladespannung von 385 Volt wird der Ladevorgang unterbrochen und der Motor wiederum in einem zweiten Teilschritt in einer vorbestimmten Wicklungskombination spannungsbeaufschlagt, so dass nun die Anfahrstellung des Motors erreicht ist. Dieser Punkt ist mit 9 gekennzeichnet.

Nach Erreichen der Anfahrstellung wird der Zwischenkreiskondensator erneut bis auf das vorbestimmte Niveau, also bis auf 385 Volt, im Punkt 10 geladen. Nun beginnt der eigentliche Anfahrvorgang, welcher den Rotor aus einer definierten Anfahrstellung heraus in vorbestimmter Drehrichtung in Bewegung setzt. Da von diesem Augenblick an die Steuerung des Motors entscheidend abhängig von der Drehstellung des Rotors ist, erfolgt nun keine weitere Ladesteuerung mehr, sondern die Ansteuerung des Motors mit der jeweils im Zwischenkreis zur Verfügung stehenden Spannung, bis der Motor dann im Punkt 11 in den selbstgeführten Betrieb übergeht, in dem die Zwischenkreisspannung 50 Volt beträgt.

Gleichzeitig mit der Überleitung in den selbstgeführten Betrieb wird der im Zwischenkreis befindliche Buck-Boost-Konverter wieder auf den Buck-Mode umgeschaltet, sofern die Spannungsversorgung ausreichend hoch ist. Der Boost-Mode, bei dem im Zwischenkreis eine gegenüber dem Eingang erhöhte Spannung anliegt, wird vorwiegend für die Anfahrsteuerung eingesetzt, um hier im Zwischenkreis ein höheres Energieniveau zu fahren.

Im normalen Betrieb hingegen ist der Buck-Mode mit 50 Volt Zwischenkreisspannung vorgesehen.

Das Pumpenaggregat ist anhand von Fig. 2 im Einzelnen dargestellt. Es ist als Tauchpumpenaggregat ausgebildet und in einem rohrförmigen abgestuften Gehäuse 12 angeordnet. Das Pumpenaggregat ist zum Absenken in ein Bohrloch vorgesehen und weist hierzu an der Oberseite eine Schlaufe 13 auf, in der ein Haken, Schäkel oder dergleichen befestigt werden kann, an dem das Aggregat in das Bohrloch abgesenkt bzw. wieder hochgezogen werden kann. Weiterhin tritt an der Oberseite ein elektrisches Versorgungskabel 14 aus, das zum direkten Anschluss an einen Windgenerator vorgesehen ist. Das Versorgungskabel 14 ist innerhalb des Gehäuses 12 bis zum unteren Ende des Aggregats geführt, wo es in der Frequenzumrichterelektronik 15 angeschlossen ist. Der hier nicht im Einzelnen dargestellte Frequenzumrichter besteht aus einem Eingangskreis, Zwischenkreis, Leistungskreis und einem Steuer- und Regelkreis. Der Leistungskreis 16 ist zwischen dem Permanentmagnetmotor 17 und der übrigen Elektronik des Frequenzumrichters angeordnet. Er steht wärmeleitend in Verbindung mit dem Gehäuse, über das die dort anfallende Wärme abgeleitet wird. Der Zwischenkreiskondensator ist in Fig. 2 unmittelbar zwischen Leistungskreis 16 und Motor 17 angeordnet und mit 18 beziffert. An den Permanentmagnetmotor 17 schließt sich nach oben achsgleich eine sechsstufige Kreiselpumpe 19 an, deren Druckstutzen 20 in der Oberseite des Gehäuses mündet. Die Einlassöffnungen 21 befinden sich in dem konusförmigen Gehäuseteil zwischen Pumpe 19 und Motor 17, dort, wo das schlanke Gehäuse im Bereich des Motors in das Gehäuse größeren Durchmessers im Bereich der Pumpe übergeht.

Anstelle der in Fig. 2 dargestellten Kreiselpumpe 19 kann beispielsweise auch eine Exzenterschneckenpumpe mit dem gleichen Motor und der gleichen Frequenzumrichterelektronik betrieben werden. Der insbesondere beim Anfahren unterschiedliche Momentenbedarf der unterschiedlichen Pumpen wird von der Steuer-und Regelelektronik des Frequenzumrichters, welche ständig auch das Versorgungsnetz überwacht, ermittelt. Aufgrund der vorbeschriebenen Regelverfahren ist es möglich, dieses Pumpenaggregat unmittelbar an eine beliebige Netzversorgung anzuschließen, beispielsweise an Solarmodule, an einen windkraftgetriebenen Generator oder an einen wasserkraftgetriebenen Generator oder auch an ein Brennstoffzellenstack. Dabei berücksichtigt insbesondere die Laderegelung für den Zwischenkreis nicht nur die Leistungsänderung des speisenden Energiewandlers, sondern die Geschwindigkeit der Leistungsänderung, so dass beispielsweise im Fall eines starken Abfalls der Versorgungsenergie die Drehzahlsteuerung entsprechend entlastend eingreift.

### Bezugszeichenliste

- 1 -: Punkt der Kurve in Fig. 1
- 2 -: Punkt der Kurve in Fig. 1
- 3 -: Punkt der Kurve in Fig. 1
- 4 -: Punkt der Kurve in Fig. 1
- 5 -: Punkt der Kurve in Fig. 1
- 6 -: Punkt der Kurve in Fig. 1
- 7 -: Punkt der Kurve in Fig. 1
- 8 -: Punkt der Kurve in Fig. 1
- 9 -: Punkt der Kurve in Fig. 1
- 10 -: Punkt der Kurve in Fig. 1
- 11 -: Punkt der Kurve in Fig. 1
- 12 -: Gehäuse
- 13 -: Schlaufe
- 14 -: Versorgungskabel
- 15 -: übrige Frequenzumrichterelektronik
- 16 -: Leistungskreis
- 17 -: Permanentmagnetmotor
- 18 -: Zwischenkreiskondensator
- 19 -: Kreiselpumpe
- 20 -: Druckstutzen
- 21 -: Einlassöffnungen

## Patentansprüche

1. Verfahren zum Betrieb eines frequenzumrichtergesteuerten Permanentmagnetmotor, bei dem der Rotor durch einen mehrere Ansteuerungsschritte umfassenden Anfahrvorgung in Rotation versetzt wird, **dadurch gekennzeichnet, dass** die Zwischenkreiskapazität des Frequenzumrichters mindestens zwischen zwei Ansteuerungsschritten bis auf ein vorbestimmtes Niveau geladen wird bevor der nachfolgende Ansteuerschritt erfolgt.

2. Verfahren nach Anspruch 1, **dadurch gekennzeichnet, dass** während des Anfahrvorgangs die Zwischenkreisspannung des Frequenzumrichters im Vergleich zur Zwischenkreisspannung des Frequenzumrichters im selbstgeführten Betrieb des Motors erhöht wird.

3. Verfahren nach einem der vorhergehenden Ansprüche, bei dem der Rotor in mehreren Teilschritten in eine Anfahrstellung gebracht wird, **dadurch gekennzeichnet, dass** die Zwischenkreiskapazität des Frequenzumrichters vor der Ansteuerung zu einem oder vorzugsweise vor der Ansteuerung zu jedem Teilschritt bis zu einem vorbestimmten Niveau geladen wird.

4. Verfahren zum Laden der Zwischenkreiskapazität eines Frequenzumrichters zur Steuerung eines Permanentmagnetmotors, insbesondere nach einem der vorhergehenden Ansprüche, **dadurch gekennzeichnet, dass** der Ladevorgang zeitweise unterbrochen wird.

5. Verfahren nach einem der vorhergehenden Ansprüche, bei dem der Frequenzumrichter von einem regenerativen Energiewandler, wie beispielsweise von einem wind-oderwassergetriebenen Generator, Solarzellen oder dergleichen gespeist wird, **dadurch gekennzeichnet, dass** der Ladevorgang in Abhängigkeit des Leistungsverlaufs des Energiewandlers unterbrochen wird.

6. Verfahren nach einem der vorhergehenden Ansprüche, bei dem der Frequenzumrichter von einem wind-oder wassergetriebenen Generator gespeist wird, **dadurch gekennzeichnet, dass** der Ladevorgang so gesteuert wird, dass die Generatordrehzahl nicht über ein vorbestimmtes Maß abfällt.

7. Verfahren nach einem der vorhergehenden Ansprüche, **dadurch gekennzeichnet, dass** der Motor hinsichtlich seines Anfahrmomentes in Abhängigkeit des Reib- und/oder Trägheitsmoment der angeschlossenen Arbeitsmaschine angesteuert wird.

8. Verfahren nach einem der vorhergehenden Ansprüche, **dadurch gekennzeichnet, dass** nach dem Anfahren des Motors und dem Überleiten in den selbstgeführten Betrieb der Motor mit einer auf die aktuelle Leistung des speisenden Energiewandlers abgestimmten Drehzahl angesteuert wird.

9. Verfahren nach einem der vorhergehenden Ansprüche, **dadurch gekennzeichnet, dass** die Drehzahlsteuerung in Abhängigkeit der Geschwindigkeit der Leistungsänderung des speisenden Energiewandlers erfolgt.

10. Verfahren nach einem der vorhergehenden Ansprüche, bei der als Energiewandler ein windgetriebener Generator ist, **dadurch gekennzeichnet, dass** die Drehzahl des Motors so gesteuert wird, dass bei einem plötzlichen Leistungsabfall des Generators der Motor mit einer geringeren Drehzahl als beim stetigem Drehzahlabfall des Generators angesteuert wird.

## Claims

1. A method for the operation of a frequency-converter-controlled permanent magnet motor, with which the rotor is set into rotation by way of a starting procedure comprising several activation steps, **characterised in that** the intermediate circuit capacitance of the frequency converter at least between two activation steps is charged up to a predefined level before the subsequent activation step is effected.

2. A method according to claim 1, **characterised in that** during the starting procedure, the intermediate circuit voltage of the frequency converter is increased in comparison to the intermediate circuit voltage of the frequency converter in self-commutated operation.

3. A method according to one of the preceding claims, with which the rotor is brought into a starting position in several part steps, **characterised in that** the intermediate circuit capacitance of the frequency converter before the activation to a part step or preferably before the activation to each part step is charged up to a predefined level.

4. A method for charging the intermediate circuit capacitance of a frequency converter for controlling a permanent magnet motor, in particular according to one of the preceding claims, **characterised in that** the charging procedure is temporarily interrupted.

5. A method according to one of the preceding claims, with which the frequency converter is fed by a regenerative power converter, such as for example by a wind-driven or water-driven generator, solar cells or likewise, **characterised in that** the charging procedure is interrupted in dependence on the power course of the power converter.

6. A method according to one of the preceding claims, with which the frequency converter is fed by a wind-driven or water-driven generator, **characterised in that** the charging procedure is controlled such that the generator rotational speed does not drop beyond a predefined amount.

7. A method according to one of the preceding claims, **characterised in that** the motor with regard to its starting moment is activated in dependence on the moment of friction and/or moment of inertia of the connected machine.

8. A method according to one of the preceding claims, **characterised in that** after the starting of the motor and the passing-over into self-commutated operation, the motor is activated with a rotational speed which is matched to the current power of the feeding power converter.

9. A method according to one of the preceding claims, **characterised in that** the rotational speed control is effected in dependence on the speed of the power change of the feeding power converter.

10. A method according to one of the preceding claims, with which the power converter is a wind-driven generator, **characterised in that** the rotational speed of the motor is controlled such that with a sudden drop of the power of the generator, the motor is activated with a lower rotational speed than with a continuous fall in the rotational speed of the generator.

## Revendications

1. Procédé pour exploiter un moteur à aimant permanent commandé par convertisseur de fréquence, dans lequel le rotor est mis en rotation par une procédure de démarrage comprenant plusieurs pas d'excitation, **caractérisé en ce que** le condensateur de circuit intermédiaire du convertisseur de fréquence est chargé au moins entre deux pas d'excitation jusqu'à un niveau prédéterminé, avant que le pas d'excitation suivant ait lieu.

2. Procédé selon la revendication 1, **caractérisé en ce que** pendant la procédure de démarrage, la tension de circuit intermédiaire du convertisseur de fréquence est augmentée par rapport à la tension de circuit intermédiaire du convertisseur de fréquence dans le régime automatique du moteur.

3. Procédé selon l'une des revendications précédentes, dans lequel le rotor est amené dans une position de démarrage en plusieurs pas partiels, **caractérisé en ce que** le condensateur de circuit intermédiaire du convertisseur de fréquence est chargé jusqu'à un niveau prédéterminé avant l'excitation à un pas partiel ou, de préférence, avant l'excitation à chaque pas partiel.

4. Procédé pour charger le condensateur de circuit intermédiaire d'un convertisseur de fréquence en vue de la commande d'un moteur à aimant permanent, notamment selon l'une des revendications précédentes, **caractérisé en ce que** l'opération de charge est interrompue temporairement.

5. Procédé selon l'une des revendications précédentes, dans lequel le convertisseur de fréquence est alimenté par un convertisseur d'énergie renouvelable comme, par exemple, par une génératrice actionnée par le vent ou par de l'eau, des cellules solaires et analogues, **caractérisé en ce que** l'opération de charge est interrompue en fonction de la courbe de variation de puissance du convertisseur d'énergie.

6. Procédé selon l'une des revendications précédentes, dans lequel le convertisseur de fréquence est alimenté par une génératrice actionnée par le vent ou par de l'eau, **caractérisé en ce que** l'opération de charge est commandée de telle façon que la vitesse de rotation de la génératrice ne chute pas au-delà d'une proportion prédéterminée.

7. Procédé selon l'une des revendications précédentes, **caractérisé en ce que** le moteur est excité, relativement à son couple de démarrage, en fonction du couple de friction et/ou du moment d'inertie de la machine de travail qui lui est raccordée.

8. Procédé selon l'une des revendications précédentes, **caractérisé en ce qu'**après le démarrage du moteur et le passage dans le régime automatique, le moteur est excité sous une vitesse de rotation accordée sur la puissance instantanée du convertisseur d'énergie assurant l'alimentation.

9. Procédé selon l'une des revendications précédentes, **caractérisé en ce que** la commande de la vitesse de rotation se fait en fonction de la vitesse de la variation de puissance du convertisseur d'énergie assurant l'alimentation.

10. Procédé selon l'une des revendications précédentes, dans lequel le convertisseur d'énergie est une génératrice actionnée par le vent, **caractérisé en ce que** la vitesse de rotation du moteur est commandée de telle façon que, dans le cas d'une chute soudaine de puissance de la génératrice, le moteur est excité sous une vitesse de rotation plus faible que dans le cas de la chute continue de la vitesse de rotation de la génératrice.
